# EUROPEAN PATENT APPLICATION

(11) **EP 2 528 197 A2**
(43) Date of publication of application: **28.11.2012**
(21) Application number: 12166033.6
(22) Date of filing: 27.04.2012
(51) Int. Cl.: H02K 1/27, H02K 1/32

(54) **Method and apparatus for cooling an electric motor rotor**

(30) Priority: 26.05.2011 US 201113116237
(71) Applicant: DEERE & COMPANY, Moline, Illinois 61265-8098 (US)
(72) Inventor: Stahlhut, Ronne D, Bettendorf, IA Iowa 52722 (US); Shoemaker, Jim M, Bettendorf, IA Iowa 52722 (US)
(74) Representative: Holst, Sönke

(57) **Abstract**

An electric motor coupled to and driving the driven device includes a rotor and a plurality of slots in the rotor. The rotor has a plurality of magnets. The plurality of slots includes a first slot associated with a corresponding one of the plurality of magnets thereby defining a first magnet. The first slot has a boundary that is partially defined by the first magnet. The first slot contains a fluid in direct contact with the first magnet.

## Description

The present invention relates to electric motors, and, more particularly, to a method and apparatus of cooling the magnets in a rotor of an electric motor.

The rotor of an electric motor is typically the rotating part of a motor and it rotates because of the magnetic fields which are arranged in the motor so that a torque is developed about the rotor's axis. Electrical systems typically include electrical power generators and motors which may have permanent magnet rotors or electromagnetic rotors. Heat is generated by the changing magnetic fields which are present in the rotor causing the temperature to rise in the rotor and it is desirable to cool the rotor to protect the magnets from damage and increase the electric machine density.

Conventional cooling methods include convective air or oil circulation through a passageway of the rotor shaft. A rotor cooling structure is illustrated in US Patent No. 5,283,488 in which a cylindrically shaped heat pipe is used to cool a rotor. The heat pipe has an internal vapor chamber with an evaporator end, a condenser end and a plurality of radial fins regularly spaced on the periphery of the heat pipe. Each fin defines an internal chamber communicating with and extending radially from a vapor chamber. A vaporizable liquid is disposed within the heat pipe and the heat exchanger is in thermal contact with the condenser end of the heat pipe.

It is also known to cool a rotor by utilizing cooling holes having a shape that is convex that goes through the rotor, as shown in US Patent No. 7,705,503, wherein the cooling holes are arranged having a predefined spacing from the paired permanent magnets. Coolant flows through the cooling holes to remove the heat conducted thereto.

In US Patent Application Publication No. 2009/0015081, a cooling structure and cooling method of a rotating electrical machine is disclosed including voids H1 and H2 through which a rotor cooling liquid is passed.

A problem with the cited prior art is that they cool the rotor but fail to directly cool the magnets, relying upon thermal conduction through solid portions of the rotor to transfer the heat to a cooling medium.

What is needed in the art is an efficient cooling method and apparatus for directly cooling the magnets of an electrical motor.

The present invention provides a method and apparatus for directly cooling the magnets of a rotor of an electric motor.

The invention in one form is directed to a vehicular device having a driven device and an electric motor coupled to and driving the driven device. The electric motor includes a rotor and a plurality of slots in the rotor. The rotor has a plurality of magnets. The plurality of slots includes a first slot associated with a corresponding one of the plurality of magnets thereby defining a first magnet. The first slot has a boundary that is partially defined by the first magnet. The first slot contains a fluid in direct contact with the first magnet.

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a schematical illustration of a vehicle incorporating an embodiment of the electrical motor cooled by the present invention;
Fig. 2 is a schematical side view of a rotor of the electric motor utilized in the vehicle of Fig. 1;
Fig. 3 is a schematical cross sectional view of the rotor of Fig. 2 taken on one end thereof;
Fig. 4 is a schematical cross sectional view of the rotor of Fig. 2 taken in a mid portion of the rotor; and
Fig. 5 is another schematical cross sectional view of a portion of the rotor of Fig. 2 taken at the other end of the rotor.

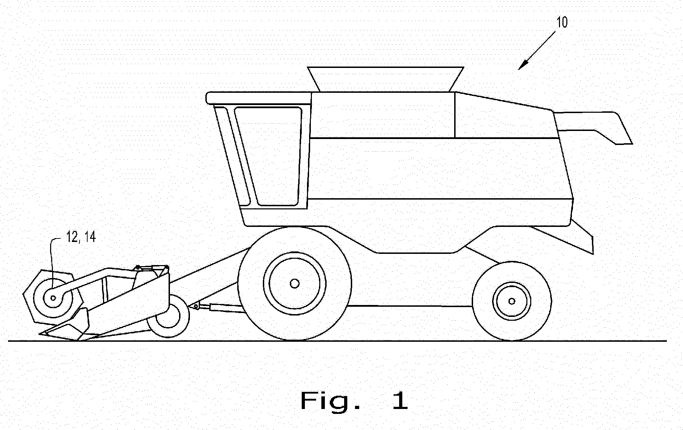

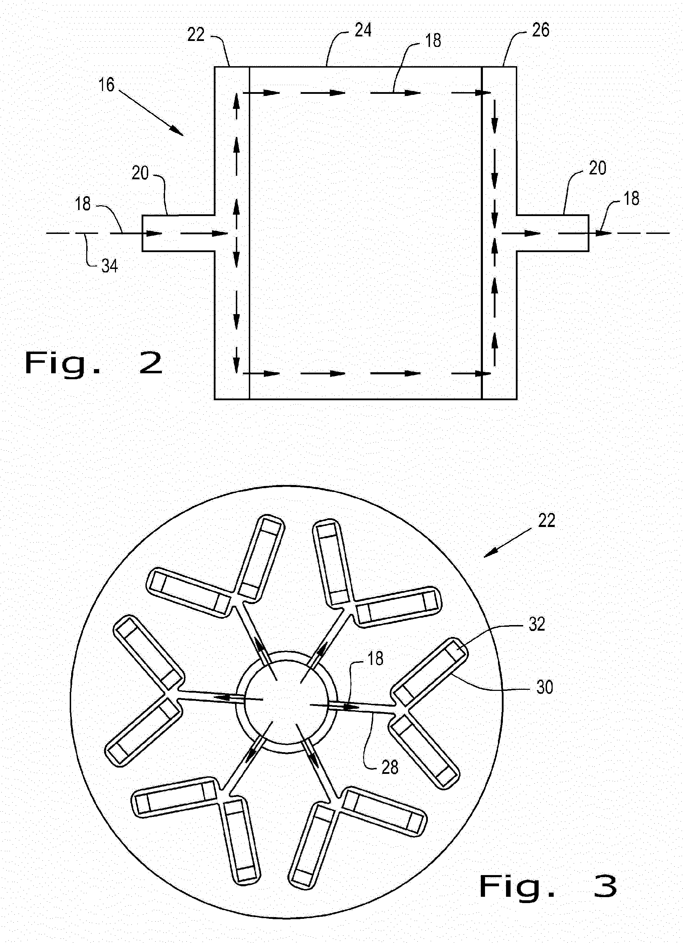

Corresponding reference characters indicate corresponding parts throughout the several views. Referring now to the drawings, and more particularly to Fig. 1, there is illustrated a vehicle 10, which may be in the form of an agricultural machine, a construction machine, a forestry machine or other vehicle having an electric motor driven assembly 12 including an electrical motor 14. Electrical motor 14 includes a rotor 16 as illustrated in Fig. 2.

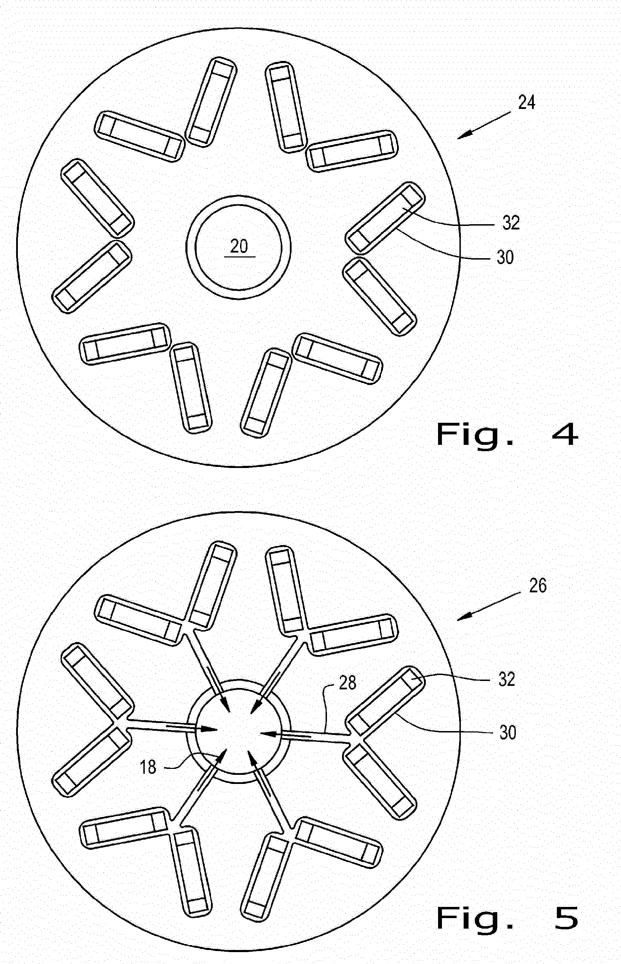

Now additionally referring to Figs. 2-5, rotor 16 includes a coolant fluid flow path 18 that travels through a shaft 20, a rotor cover or section 22, through a mid section 24, through a second rotor cover 26 and back through shaft 20. Rotor section 22 may be a series of laminations or be made of an integral construct having a rotor cover 22 in which coolant fluid flow path 18 extends radially outward through channels 28 to arrive at slots 30 through which the oil flows past magnets 32. When the cooling fluid goes through mid section 24 of rotor 16, the laminations may be as shown in Fig. 4 where magnets 32 are substantially surrounded by slot 30 through which the coolant fluid is flowing. When the cooling fluid reaches end section 26, which may be a lamination or end cap having channels 28, coolant fluid flow 18 passes the fluid back to shaft 20 and it then exits from rotor assembly 16.

Although, for purposes of clarity, magnets 32 are illustrated schematically as not touching slots 30, it is contemplated that magnets 32 will be secured to portions of rotor 16 yet allowing a substantial immersing of magnets 32 by the cooling fluid, which is in direct contact with magnets 32. Fluid path 18 travels essentially along substantial portion of the length of rotor 16, as shown in Fig. 2. Fluid flow path 18 may be parallel, or substantially parallel, with rotary axis 34 and is radially directed at rotor covers 22 and 26. Slots 30 can be considered as having an inner boundary that consists of the outer portion of magnets 32. Also, slots 30 may substantially surround magnets 32 on all sides so that the coolant fluid can substantially surround magnets 32. Slots 30 and magnets 32 may be arranged in substantially symmetrical fashion as viewed in Figs. 3-5. A series of laminations may make up mid section 24. Rotor covers 22 and 26 may be substantially similar or may even be identical with the cooling fluid flow path 18 being defined by the pressure applied to the fluid as it is forced through rotor 16.

Advantageously, the present invention allows for direct contact of the coolant fluid with magnets 32 in rotor 16. It is also contemplated that slots 30 and channels 28 of the present invention can also be applied to other magnetic constructs, such as electromagnets, where the windings may be in direct contact with the cooling fluid of the rotor 16. While the fluid flow path has been schematically illustrated as entering the center of shaft 20, it is also contemplated that the flow path may come in from a side and exit through a side of shaft 20.

## Claims

1. An electric motor for use in a vehicle, the electric motor comprising a rotor having a plurality of magnets; and a plurality of slots in said rotor including a first slot associated with a corresponding one of said plurality of magnets defining a first magnet, said first slot having a boundary that is partially defined by said first magnet, said first slot containing a fluid in direct contact with said first magnet.

2. The electric motor of claim 1, wherein the fluid in said first slot moves along a fluid path in said rotor, said rotor having a length, said fluid path being substantially the length of said rotor.

3. The electric motor of claim 2, wherein said rotor has a rotational axis, said fluid path that travels along the length of said rotor being substantially parallel with said rotational axis.

4. The electric motor of claim 3, wherein said rotor further includes a shaft; a plurality of laminations connected to said shaft, said plurality of slots being contained in said laminations; a first channel in at least one lamination that allows the fluid to pass from said shaft to said first slot; and a second channel in at least one other lamination that allows the fluid to pass from said first slot to said shaft.

5. The electric motor of claim 4, wherein the fluid path in the rotor is a path starting in one end of said shaft and then passing sequentially through said first channel, through said first slot, through said second channel, then through an other end of said shaft.

6. The electric motor of claim 4, wherein said first channel and said second channel both extend in a substantially radial direction relative to the rotational axis.

7. The electric motor of claim 1, wherein said first slot substantially surrounds said first magnet with said first magnet defining an inner boundary of said first slot.

8. The electric motor of claim 7, wherein said plurality of magnets and plurality of slots in said rotor are arranged in a substantially symmetrical manner when viewed perpendicular to said rotational axis.

9. The electric motor of claim 8, wherein said rotor of said electric motor further comprises a shaft; a plurality of laminations connected to said shaft, said plurality of slots being contained in said laminations; a plurality of first channels in at least one lamination that allows the fluid to pass from said shaft to a corresponding one of said plurality of slots; and a plurality of second channels in at least one other lamination that allows the fluid to pass from said plurality of slots to said shaft.

10. The electric motor of claim 9, wherein said plurality of first channels in said at least one lamination define a first rotor cover, and said plurality of second channels in said at least one other lamination define a second rotor cover, said first rotor cover and said second rotor cover being substantially the same.

11. A vehicular device, comprising a driven device; and an electric motor according to one of the preceding claims coupled to and driving said driven device.
